# EUROPEAN PATENT APPLICATION

(11) **EP 3 324 472 A1**
(43) Date of publication of application: **23.05.2018**
(21) Application number: 16824054.7
(22) Date of filing: 08.07.2016
(51) Int. Cl.: H01M 8/04858, H01M 8/04225, H01M 8/04228, H01M 8/04302, H01M 8/04303, H01M 8/10

(54) **FUEL CELL SYSTEM AND OPERATING METHOD FOR SAME**

(30) Priority: 16.07.2015 JP 2015142197
(71) Applicant: Panasonic Intellectual Property Management Co., Ltd., Osaka-shi, Osaka 540-6207 (JP)
(72) Inventor: TANIYAMA, Akiko, Osaka-shi Osaka 540-6207 (JP); TAMURA, Yoshio, Osaka-shi Osaka 540-6207 (JP); OZEKI, Masataka, Osaka-shi Osaka 540-6207 (JP)
(74) Representative: Grünecker Patent- und Rechtsanwälte PartG mbB
(86) International application number: PCT/JP2016/003246
(87) International publication number: WO 2017/010069

(57) **Abstract**

Fuel cell system (100) in which a plurality of fuel cell stacks (10A to ION) are connected to one another includes controller (3). Controller (3) controls operations of the plurality of fuel cell stacks (10A to 10N) to minimize the number of fuel cell stacks (10A to 10N) to be operated, to acquire a target power generation output.

## Description

### TECHNICAL FIELD

The present invention relates to a fuel cell system in which a plurality of fuel cell stacks are connected to one another and an operating method for the same.

### BACKGROUND ART

Recently, a home-use fuel cell system that is installed and used in a detached house, collective housing, and the like has been known. The home-use fuel cell system is configured to cover consuming power consumed in a home, and its power generation output is small, for example, 700 watts to 1000 watts.

Hence, a technology to acquire a power generation output of, for example, 3 kilowatts to 5 kilowatts by using such a home-use fuel cell system has been developed, and a control method to acquire the power generation output while connecting a plurality of fuel cell units in parallel has been proposed (for example, refer to PTL 1).

FIG. 7 illustrates conventional fuel cell system 200 described in PTL 1. As illustrated in FIG. 7, fuel cell system 200 includes first current converters 208A to 208D, second current converters 209A to 209D, and fuel cell units 220A to 220D. Fuel cell units 220A to 220D are configured with controllers 203A to 203D, output controllers 206A to 206D, and fuel cell stacks 210A to 210D, respectively. Controllers 203A to 203D respectively control power generation outputs of fuel cell stacks 210A to 210D, and output controllers 206A to 206D respectively convert DC power generated in fuel cell stacks 210A to 210D into AC power.

Conventional fuel cell system 200 is configured to detect a current flowing through a commercial power line by using first current converters 208A to 208D, and detect currents flowing through power generation output lines of fuel cell stacks 210A to 210D by using second current converters 209A to 209D, respectively. Conventional fuel cell system 200 monitors power of the commercial power line and power generation outputs of a plurality of fuel cell units 220A to 220D to control power generation outputs of fuel cell stacks 210A to 210D.

With this configuration, respective power generation outputs of fuel cell stacks 210A to 210D are controlled so as to be equalized, and power can stably be output. As a result, power generation efficiency of the plurality of fuel cell units 220A to 220D as a whole can be enhanced.

However, in the above-described conventional configuration, it is not considered that the fuel cell stacks are degraded and voltages thereof are lowered as an operation time of the fuel cell system becomes longer. Power generation outputs of respective fuel cell units are controlled so as to be equalize, to enhance power generation efficiency of the entire fuel cell system.

When the power generation outputs of respective fuel cell units are controlled so as to be equalized, in a case in which four fuel cell units each of which has a rated power generation output of 700 watts are connected in parallel, and consuming power of an electric apparatus is 1200 watts, for example, each of the four fuel cell units generates power of 300 watts. In this case, all the four fuel cell units are operated, and therefore voltages of all fuel cell stacks in the fuel cell unit are lowered with passing of their operation times.

Therefore in comparison with, for example, a case in which a power generation output of a first fuel cell stack is 700 watts, a power generation output of a second fuel cell stack is 500 watts, and third and fourth fuel cell stacks do not operate, when control is performed so as to equalize a power generation output of each fuel cell stack, voltages of all fuel cell stacks are lowered. Therefore a required amount of fuel gas is not fed to the fuel cell stacks due to an upper limit of capacity of a fuel gas feeding system (for example, a gas cylinder and a booster) that feeds the fuel gas to the fuel cell stacks. Hence currents of the fuel cell stacks cannot be raised, and a maximum power generation output is lowered with passing of their operation times, which causes a problem.

### Citation List

### Patent Literature

PTL 1: Unexamined Japanese Patent Publication No. 2014-103092

### SUMMARY OF THE INVENTION

The present invention is made to solve the above conventional problem, and provides a fuel cell system in which a plurality of fuel cell stacks are connected to one another, the fuel cell system suppressing a maximum power generation output from being lowered with passing of an operation time.

More specifically, a fuel cell system according to an example of the exemplary embodiments of the present invention is a fuel cell system in which a plurality of fuel cell stacks are connected to one another, which includes a controller that is configured to control operations of the plurality of fuel cell stacks so as to minimize the number of fuel cell stack to be operated among the plurality of fuel cell stacks, to acquire a target power generation output.

With the above-described configuration, the number of fuel cell stacks whose voltages are lowered with passing of the operation time can be minimized. This configuration can suppress the maximum power generation output from being lowered with passing of the operation time, in comparison with a case in which all fuel cell stacks are operated to acquire the target power generation output.

### BRIEF DESCRIPTION OF DRAWINGS

FIG. 1 is a block diagram illustrating a configuration of a fuel cell system according to a first exemplary embodiment of the present invention.
FIG. 2 is a flowchart illustrating an operating method for the fuel cell system according to the first exemplary embodiment of the present invention.
FIG. 3 is a block diagram illustrating a configuration of a fuel cell system according to a second exemplary embodiment of the present invention.
FIG. 4 is a flowchart illustrating an operating method for the fuel cell system according to the second exemplary embodiment of the present invention.
FIG. 5 is a flowchart illustrating an operating method for a fuel cell system according to a third exemplary embodiment of the present invention.
FIG. 6 is a flowchart illustrating an operating method for a fuel cell system according to a fourth exemplary embodiment of the present invention.

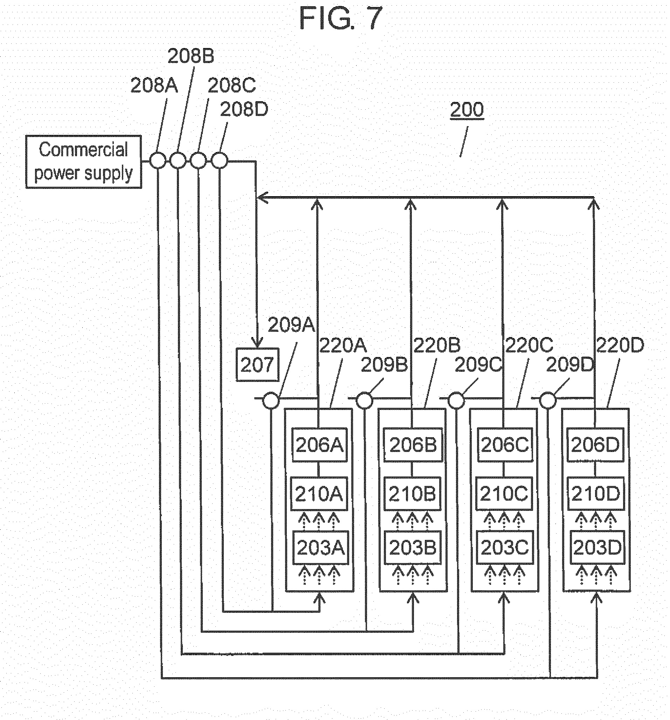

FIG. 7 is a block diagram illustrating a configuration of a conventional fuel cell system.

### DESCRIPTION OF EMBODIMENTS

Hereinafter, exemplary embodiments according to the present invention will be described with reference to the drawings. Note that the present invention is not limited by the exemplary embodiments.

### (First exemplary embodiment)

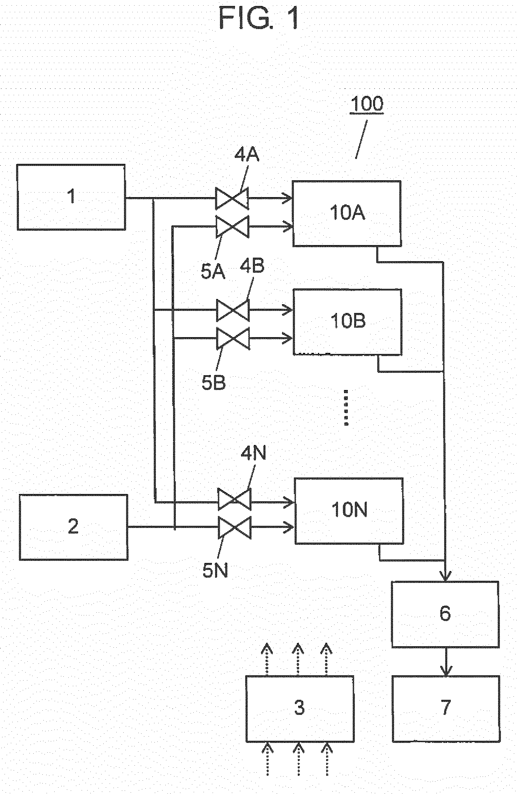

FIG. 1 is a block diagram illustrating a configuration of a fuel cell system according to a first exemplary embodiment of the present invention. In FIG. 1, fuel cell system 100 includes fuel gas feeder 1, oxidizing gas feeder 2, controller 3, fuel gas switching valves 4A to 4N, oxidizing gas switching valves 5A to 5N, output controller 6 (output controllers 6A to 6N), electric apparatus 7, and fuel cell stacks 10A to 10N.

Fuel gas feeder 1 is an apparatus that feeds fuel gas to fuel cell stacks 10A to 10N. Examples of fuel gas feeder 1 include a fuel gas infrastructure having a predetermined feeding pressure. Hydrogen gas is used as the fuel gas.

Oxidizing gas feeder 2 is an apparatus that adjusts a flow rate of oxidizing gas to be fed to fuel cell stacks 10A to 10N. A constant capacity pump is used as oxidizing gas feeder 2, for example. Air is generally used as oxidizing gas.

Controller 3 may be any controller that has a control function, and includes an operation processor (not illustrated) and a storage (not illustrated) that stores a control program. A central processing unit (CPU) is illustrated as the operation processor. A memory is illustrated as the storage.

Fuel gas switching valves 4A to 4N are respectively disposed in paths that feed the fuel gas from fuel gas feeder 1 to fuel cell stacks 10A to 10N, and are respectively opened and closed by control signals from controller 3. Each of fuel gas switching valves 4A to 4N may be any valve that can open and close the path, and is an electromagnetic valve, for example.

Oxidizing gas switching valves 5A to 5N are respectively disposed in paths that feed oxidizing gas from oxidizing gas feeder 2 to fuel cell stacks 10A to 10N, and are respectively opened and closed by control signals from controller 3. Each of oxidizing gas switching valves 5A to 5N may be any valve that can open and close the path, and is an electromagnetic valve, for example.

Output controller 6 is disposed between fuel cell stacks 10A to 10N and electric apparatus 7, and includes DC-AC converters (not illustrated) that convert DC power generated by fuel cell stacks 10A to 10N into AC power. Output controller 6 is configured with inverters, for example.

Electric apparatus 7 is one of various power-consuming apparatuses that use electricity, such as a refrigerator and a laundry machine. Electric apparatus 7 may be any apparatus that consumes AC power fed from output controller 6.

Fuel cell stacks 10A to 10N generates power by using the fuel gas fed from fuel gas feeder 1 and oxidizing gas fed from oxidizing gas feeder 2. A solid polymer fuel cell is used as the fuel cell stack, for example.

The solid polymer fuel cell generally has a structure in which a membrane electrode assembly (MEA) is held between separators. The MEA generally has a structure in which a gas diffusion layer, a cathode catalyst layer, a solid polymer electrolyte membrane, an anode catalyst layer, and the gas diffusion layer are laminated. A cell reaction proceeds in a catalyst layer formed of a catalyst, a carrier for carrying the catalyst, and an ionomer (ion-conducting polymer).

It has been known that fuel cell stacks 10A to 10N are degraded as an operation time becomes longer, and voltages of fuel cell stacks 10A to ION are lowered by the degradation. In general, the degradation is caused by, for example, a change in an electrode structure due to poisoning of the cathode catalyst layer by impurity components in air, and poisoning of the anode catalyst layer by impurity components in the fuel gas. When the electrode structure is changed, gas diffusivity and discharge performance of produced water are lowered, thereby lowering the voltages.

When the voltages of fuel cell stacks 10A to 10N are lowered, a required amount of fuel gas is not fed to fuel cell stacks 10A to 10N due to an upper limit of capacity of fuel gas feeder 1 that feeds the fuel gas to fuel cell stacks 10A to 10N. Therefore currents of fuel cell stacks 10A to 10N cannot be raised, and a maximum power generation output is lowered with passing of the operation time.

As the operation time becomes longer, the voltages of fuel cell stacks 10A to 10N are lowered. This operation time is a time in which each of fuel cell stacks 10A to ION generates power.

A reference mark attached to a plurality of identical elements will be described. For example, with respect to "fuel cell stacks 10A to 10N", suffixes "A" and "N" are attached to discriminate identical elements from one another, and the suffix "N" means that N fuel cell stacks 10 are provided.

In the following description, when referring to arbitrary fuel cell stack 10, description is made using "fuel cell stack 10" while attaching only reference mark "10" and omitting the suffix. In this case, fuel cell stack 10 indicates one or more fuel cell stacks.

Further, in order to discriminate arbitrary fuel cell stacks 10 from one another, suffix "k" or "m" is attached to fuel cell stack 10. Each of "k" and "m" is an arbitrary integer from 1 to n.

Similarly, a notation of fuel gas switching valves 4A to 4N means that N fuel gas switching valves 4 are provided, and a notation of oxidizing gas switching valves 5A to 5N means that N oxidizing gas switching valves 5 are provided.

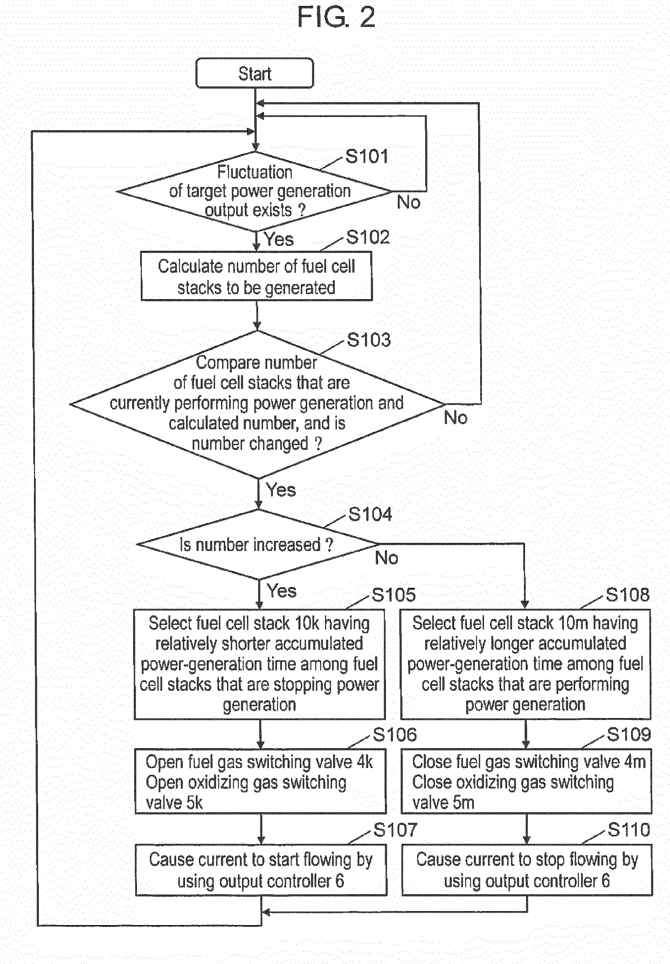

Hereinafter, operations and advantageous effects of fuel cell system 100 according to the present exemplary embodiment, which has the above-described configuration, will be described with reference to FIG. 2.

FIG. 2 is a flowchart illustrating an operating method for fuel cell system 100 according to the first exemplary embodiment of the present invention. Operations (steps) illustrated in the flowchart of FIG. 2 are executed based on control of controller 3.

As illustrated in FIG. 2, controller 3 causes fuel cell system 100 to start operating when power is applied to fuel cell system 100, and constantly performs the following operations.

First, controller 3 determines a target power generation output to be generated by fuel cell system 100 according to a fluctuation in consuming power of electric apparatus 7, and confirms a fluctuation in the target power generation output (step S101). The fluctuation in the target power generation output occurs not only on power-generating, but also on switching from activation to power generation, and the target power generation output fluctuates from 0 watts to 200 watts, for example.

In step S101, when controller 3 confirms the fluctuation in the target power generation output (Yes in S101), the process proceeds to step S102.

In step S102, controller 3 calculates a number of fuel cell stacks 10 to be operated so as to acquire the target power generation output confirmed in step S101 by using fuel cell stacks 10 as few as possible. In other words, controller 3 calculates an absolute minimum number of fuel cell stacks 10 to acquire the target power generation output.

For example, in a case in which four fuel cell stacks 10A to 10D each of which has a rated power generation output of 700 watts are connected in parallel in fuel cell system 100, and the target power generation output is 1200 watts, controller 3 calculates that the absolute minimum number is two while setting a power generation output of first fuel cell stack 10 to 700 watts and setting a power generation output of second fuel cell stack 10 to 500 watts.

In step S101, when controller 3 confirms no fluctuation in the target power generation output (No in S101), the process returns to step S101 and repeats S101.

Next, in step S103, controller 3 compares the number of fuel cell stacks 10 that are currently performing power generation with the number of fuel cell stacks 10 calculated in step S102. When the number of fuel cell stacks 10 to be operated needs to be changed (Yes in S103), the process proceeds to step S104.

In step S104, controller 3 confirms whether the number of fuel cell stacks 10 to be operated, which has been confirmed in step S103, is increased. When the number of fuel cell stacks 10 to be operated is increased (Yes in S104), the process proceeds to S105.

In step S105, controller 3 selects fuel cell stack 10k whose accumulated power-generation time is relatively shorter among fuel cell stacks 10 that are stopping power generation, and the process proceeds to S106. The accumulated power-generation time means a total time of power generation from an initial state of fuel cell stack 10 with no power generation.

In step S106, controller 3 opens fuel gas switching valve 4k and oxidizing gas switching valve 5k to activate fuel cell stack 10k selected in step S105, and the process proceeds to step S107.

In step S107, controller 3 causes a current to start flowing by using output controller 6, and the process returns to step S101. A control period from step S101 to step S107 may be set according to a speed of the fluctuation in the target power generation output, and may be set to one second, for example.

In step S104, when the number of fuel cell stacks 10 to be operated is decreased (No in S104), the process proceeds to S108.

In step S108, controller 3 selects fuel cell stack 10m whose accumulated power-generation time is relatively longer among fuel cell stacks 10 that are performing power generation, and the process proceeds to S109.

In step S109, controller 3 closes fuel gas switching valve 4m and oxidizing gas switching valve 5m to stop fuel cell stack 10m selected in step S108, and the process proceeds to step S110.

In step S110, controller 3 causes a current to stop flowing by using output controller 6, and the process returns to step S101. A control period from step S101 to step S110 may be set according to the speed of the fluctuation in the target power generation output, and may be set to one second, for example.

Fuel cell system 100 repeats operations from step S101 to step S110 described above.

With the above-described configuration (operation), fuel cell system 100 according to the present exemplary embodiment can minimize the number of fuel cell stacks 10 whose voltages are lowered with passing of the operation time, and can suppress a maximum power generation output from being lowered with passing of the operation time in comparison with the case in which all fuel cell stacks 10 are operated to acquire the target power generation output.

Further, when the number of fuel cell stacks 10 to be operated is increased, fuel cell stack 10 having a relatively shorter accumulated power-generation time among fuel cell stacks 10 that are stopping power operation is preferentially caused to operate. Therefore a voltage of only specific fuel cell stack 10 can be prevented from being extremely lowered.

Further, when the number of fuel cell stacks 10 to be operated is decreased, fuel cell stack 10 having a relatively longer accumulated power-generation time among fuel cell stacks 10 that are performing power operation is preferentially caused to stop power generation. Therefore a voltage of only specific fuel cell stack 10 can be prevented from being extremely lowered.

Note that fuel gas feeder 1 is not limited to the fuel gas infrastructure, and may be an apparatus that is configured with a fuel gas cylinder or a booster, and a flowmeter, and adjusts a flow rate of fuel gas. The fuel gas is not limited to the hydrogen gas, and hydrocarbon such as town gas and alcohol such as methanol may be used.

When the fuel gas is hydrocarbon such as town gas and alcohol such as methanol, reformers that generate hydrogen gas through a reforming reaction using the fuel gas may be disposed between fuel gas feeder 1 and fuel gas switching valves 4A to 4N.

Oxidizing gas feeder 2 is not limited to the constant capacity pump, and may be configured with a booster and a flowmeter.

Further, controller 3 may be configured with an independent controller that performs centralized control, or may be configured with a plurality of controllers that cooperates with each other to perform decentralized control.

Note that single output controller 6 may be provided to a plurality of fuel cell stacks 10A to 10N as illustrated in FIG. 1, or each of the plurality of fuel cell stacks 10A to 10N is provided with single output controller 6. In general, a configuration in which the plurality of fuel cell stacks 10A to ION are respectively provided with output controllers 6A to 6N has better efficiency for converting DC power to AC power.

Fuel cell stacks 10A to ION are not limited to be configured with the solid polymer fuel cell, and may be configured with a fuel cell of any other kind. For example, a solid oxide fuel cell and a phosphoric acid fuel cell are used. Note that, when the fuel cell stack is configured with the solid oxide fuel cell, the reformers and fuel cell stacks 10A to 10N are incorporated into one container.

The operation time is not limited to the time in which each of fuel cell stacks 10A to 10N generates power, and may be a time in which oxidizing gas is fed to fuel cell stacks 10A to 10N or a time in which fuel gas is fed to fuel cell stacks 10A to 10N, for example.

Note that, in the present exemplary embodiment, controller 3 defines that the time when power is applied to fuel cell system 100 is start of the operation of fuel cell system 100, but is not limited thereto. The time when fuel cell stacks 10 start power generation may be the start of the operation of fuel cell system 100.

In fuel cell system 100 according to the present exemplary embodiment, fuel cell stacks 10A to ION are connected in parallel, but are not limited thereto. Fuel cell stacks 10A to 10N may be connected in series.

### (Second exemplary embodiment)

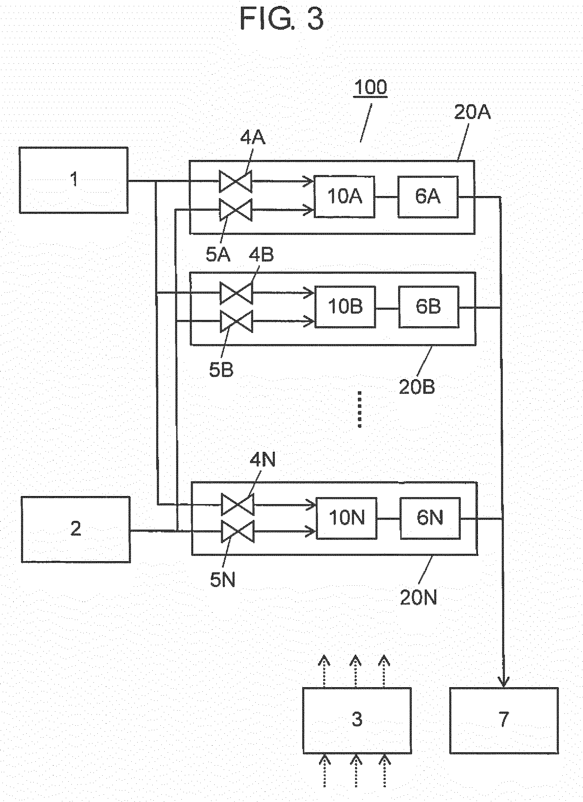

A configuration of a fuel cell system according to a second exemplary embodiment of the present invention is hereinafter described with reference to FIG. 3. FIG. 3 is a block diagram illustrating a configuration of the fuel cell system according to the second exemplary embodiment of the present invention. It should be noted that constituent elements substantially identical to the constituent elements of the first exemplary embodiment are denoted by the identical reference marks and description will be omitted in the present exemplary embodiment.

Fuel cell system 100 according to the present exemplary embodiment illustrated in FIG. 3 is different from that of the first exemplary embodiment in that a plurality of fuel cell units 20 (fuel cell units 20A to 20N) each of which includes fuel cell stack 10, fuel gas switching valve 4, oxidizing gas switching valve 5, output controller 6, and a fuel cell unit controller are connected.

Fuel cell units 20A to 20N respectively includes fuel cell stacks 10A to 10N that generate DC power, output controllers 6A to 6N that respectively convert the DC power from fuel cell stacks 10A to 10N into AC power, and the fuel cell unit controllers that control respective operations of fuel cell stacks 10A to 10N. Each of fuel cell units 20A to 20N receives an instruction of controller 3 to start and stop.

In general, a configuration in which the plurality of fuel cell stacks 10A to 10N are respectively provided with output controllers 6A to 6N has better efficiency for converting DC power into AC power. Therefore energy losses in output controllers 6A to 6N can be lowered.

A reference mark attached to a plurality of identical elements will be described. For example, with respect to "fuel cell units 20A to 20N", suffixes "A" and "N" are attached to discriminate identical elements from one another, and the suffix "N" means that N fuel cell units 20 are provided.

In the following description, when referring to arbitrary fuel cell unit 20, description is made using "fuel cell unit 20" while attaching only reference mark "20" and omitting the suffix. In this case, a notation of fuel cell unit 20 indicates one or more fuel cell units. Further, in order to discriminate arbitrary fuel cell unit 20 from one another, suffix "k" or "m" is attached to fuel cell unit 20. Each of "k" and "m" is an arbitrary integer from 1 to n.

Similarly, a notation of fuel gas switching valves 4A to 4N means that N fuel gas switching valves 4 are provided, and a notation of oxidizing gas switching valves 5A to 5N means that N oxidizing gas switching valves 5 are provided. Furthermore, a notation of output controllers 6A to 6N means that N output controllers 6 are provided, and a notation of fuel cell stacks 10A to 10N means that N fuel cell 10 are provided.

Operations of each apparatus configuring fuel cell system 100 according to the present exemplary embodiment are similar to those of the first exemplary embodiment. Therefore the constituent elements similar to those of the first exemplary embodiment are attached with the identical reference marks and description will be omitted.

Fuel cell system 100 according to the present exemplary embodiment is different from that of the first exemplary embodiment in that, when a difference between the accumulated power-generation time of fuel cell unit 20 that is performing power generation and has the longest accumulated power-generation time and the accumulated power-generation time of fuel cell unit 20 that are stopping power generation and has the shortest accumulated power-generation time becomes not less than a predetermined value, controller 3 causes fuel cell unit 20 that is stopping power generation and has the shortest accumulated power-generation time to perform power generation, while causing fuel cell unit 20 that is performing power generation and has the longest accumulated power-generation time to stop power generation, to control so as to maintain the power generation output.

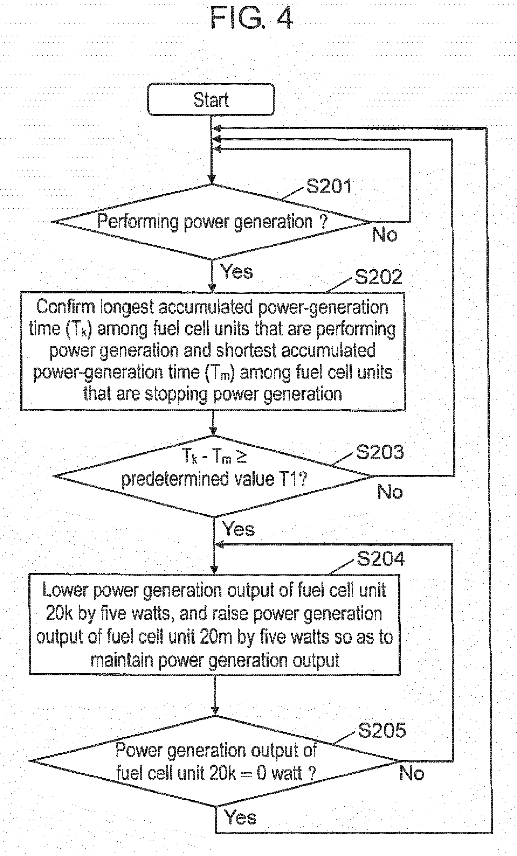

Hereinafter, operations and advantageous effects of fuel cell system 100 according to the present exemplary embodiment, which has the above-described configuration, will be described with reference to FIG. 4.

FIG. 4 is a flowchart illustrating an operating method for fuel cell system 100 according to the present exemplary embodiment. Operations (steps) illustrated in the flowchart of FIG. 4 are executed based on control of controller 3. As illustrated in FIG. 4, for example, controller 3 causes fuel cell system 100 to start operating when power is applied to fuel cell system 100, and constantly performs the following operations.

First, controller 3 confirms whether at least one of fuel cell units 20A to 20N is performing power generation (step S201).

In step S201, when controller 3 confirms that at least one of fuel cell units 20A to 20N is performing power generation (Yes in S201), the process proceeds to step S202.

In step S201, when controller 3 confirms that none of fuel cell units 20A to 20N is performing power generation (Yes in S201), the process returns to step S201.

In step S202, controller 3 confirms the longest accumulated power-generation time (Tk) in fuel cell units 20 that are performing power generation and the shortest accumulated power-generation time (Tm) in fuel cell units 20 that are stopping power generation, and the process proceeds to step S203.

In a case in which four fuel cell units 20A to 20D each of which has a rated power generation output of 700 watts are connected in parallel in fuel cell system 100, controller 3 confirms the accumulated power-generation time of each of fuel cell units 20A to 20D. For example, controller 3 confirms in a manner in which the accumulated power-generation time of fuel cell unit 20A is 490 hours, the accumulated power-generation time of fuel cell unit 20B is 480 hours, the accumulated power-generation time of fuel cell unit 20C is 478 hours, and the accumulated power-generation time of fuel cell unit 20D is 490 hours. Controller 3 defines fuel cell unit 20A or 20D as fuel cell unit 20k having the longest accumulated power-generation time (Tk = 490 hours) among fuel cell units 20 that are performing power generation, and defines fuel cell unit 20C as fuel cell unit 20m having the shortest accumulated power-generation time (Tm = 478 hours) among fuel cell units 20 that are stopping power generation.

In step S203, controller 3 confirms whether the difference (Tk - Tm) between the longest accumulated power-generation time (Tk) among fuel cell units 20 that are performing power generation and the shortest accumulated power-generation time (Tm) among fuel cell units 20 that are stopping power generation becomes not less than predetermined value T1. When the difference of the accumulated power-generation time (Tk - Tm) becomes not less than predetermined value T1, the process proceeds to step S204.

In order to acquire the target power generation output, when specific fuel cell unit 20 continuously performs power generation for a long time regardless of increase or decrease of the number of fuel cell units 20 to be operated, the accumulated power-generation time of specific fuel cell unit 20 is increased, and a voltage of specific fuel cell unit 20 is extremely lowered.

A continuous power generation time of fuel cell unit 20 from start to stop of power generation is generally 24 hours when fuel cell stack 10 is the solid polymer fuel cell. However, the continuous power generation time may be not less than 1000 hours when fuel cell stack 10 is the solid oxide fuel cell.

In this manner, appropriate predetermined value T1 is different according to a kind of fuel cell stack 10 to be used and an operating method for fuel cell system 100. Therefore predetermined value T1 may be set according to the kind of fuel cell stack 10 to be used, the operating method for fuel cell system 100, and the like. For example, T1 = 12 hours is set.

In the present exemplary embodiment, fuel cell unit 20k having the longest accumulated power-generation time (Tk = 490 hours) is fuel cell unit 20A or 20D among fuel cell units 20 that are performing power generation, and fuel cell unit 20m having the shortest accumulated power-generation time (Tm = 478 hours) is fuel cell unit 20C among fuel cell units 20 that are stopping power generation. Therefore the difference of the accumulated power-generation time (Tk - Tm) = 12 hours is calculated. Accordingly, when predetermined value T1 = 12 hours is set, the difference of the accumulated power-generation time (Tk - Tm) becomes not less than predetermined value T1. Then the process proceeds to S204.

In step S203, when controller 3 confirms that the difference of the accumulated power-generation time (Tk - Tm) becomes less than predetermined value T1 (No in S201), the process returns to step S201. A control period from step S201 to step S203 is set to one second, for example.

In step S204, controller 3 lowers a power generation output of fuel cell unit 20k having the longest accumulated power-generation time (Tk) among fuel cell units 20 that are performing power generation by five watts. Further controller 3 causes fuel cell unit 20m having the shortest accumulated power-generation time (Tm) among fuel cell units 20 that are stopping power generation to perform power generation while raising a power generation output of fuel cell unit 20m by five watts, to acquire the same power generation output as a power generation output before the power generation output of fuel cell unit 20k having the longest accumulated power-generation time (Tk) among fuel cell units 20 that are performing power generation is lowered. Then the process proceeds to step S205.

When fuel cell unit 20m is caused to perform power generation, the fuel cell unit controller opens fuel gas switching valve 4m and oxidizing gas switching valve 5m to cause a current to start flowing by output controller 6m.

When a minimum power generation output of fuel cell unit 20m having the shortest accumulated power-generation time (Tm) among fuel cell units 20 that are stopping power generation is, for example, 200 watts, power generation is started from 200 watts. Then the power generation output of fuel cell system 100 exceeds the target power generation output.

Hence controller 3 raises the power generation output of fuel cell unit 20m having the shortest accumulated power-generation time (Tm) among fuel cell units 20 that are stopping power-generation by 200 watts, after the power generation output of fuel cell unit 20k having the longest accumulated power-generation time (Tk) among fuel cell units 20 that are performing power generation is lowered by 200 watts. At this time, since the power generation output is temporarily lowered by 200 watts, power may be fed from a commercial power supply, for example.

In step S205, controller 3 confirms whether the power generation output of fuel cell unit 20k having the longest accumulated power-generation time (Tk) among fuel cell units 20 that are performing power generation becomes 0 watts. When the power generation output becomes 0 watts (Yes in S205), the process returns to step S201.

In step S205, controller 3 confirms that the power generation output of fuel cell unit 20k having the longest accumulated power-generation time (Tk) among fuel cell units 20 that are performing power generation does not become 0 watts (No in S205), the process returns to step S204.

A control period from step S204 to step S205 may be set to a value in which fuel cell unit 20 can sufficiently cope with an increase or decrease amount of the power generation output, and may be set to one second, for example.

With the above-described configuration, fuel cell system 100 according to the present exemplary embodiment can prevent the voltage of only specific fuel cell unit 20 from being extremely lowered regardless of an increase or decrease of the number of fuel cell units 20 to be operated.

Further, with the above-described configuration, when fuel cell unit 20 that is performing power generation and has the longest accumulated power-generation time is switched to fuel cell unit 20 that is stopping power generation and has the shortest accumulated power-generation time, fuel cell system 100 according to the present exemplary embodiment can maintain the same power generation output as the power generation output before switching, and can feed a stable power generation output.

Note that controller 3 defines that the time when power is applied to fuel cell system 100 is start of the operation of fuel cell system 100, but is not limited thereto. The time when fuel cell stacks 10A to 10N start power generation may be the start of the operation of fuel cell system 100.

In the present exemplary embodiment, the case in which the difference of the accumulated power-generation time (Tk - Tm) becomes not less than predetermined value T1 is used, but the case used is not limited thereto. A case in which ratio Tk/Tm of the accumulated power-generation time becomes not less than predetermined value T2 may be used. In this case, T2 = 1.1 is set, for example.

Further, a control period from step S201 to step S203 is set to one second, but is not limited thereto. For example, a confirmation as to whether the difference the accumulated power-generation time (Tk - Tm) becomes not less than predetermined value T1 may be made once per hour.

Note that, in step S204, the power generation output is increased or decreased by five watts per once, but is not limited thereto. A value in which fuel cell unit 20 can sufficiently cope with an increase or decrease of the power generation output may be set.

When fuel cell unit 20k having the longest accumulated power-generation time (Tk) among fuel cell units 20 that are performing power generation is switched to fuel cell unit 20m having the shortest accumulated power-generation time (Tm) among fuel cell units 20 that are stopping power generation, the number of fuel cell units 20 that are performing power generation is transiently, but temporarily, increased.

Further, in step S204, after raising the power generation output of fuel cell unit 20m having the shortest accumulated power-generation time (Tm) among fuel cell units 20 that are stopping power generation to, for example, 200 watts that are the minimum power generation output, the power generation output of fuel cell unit 20k having the longest accumulated power-generation time (Tk) among fuel cell units 20 that are performing power generation may be lowered by 200 watts. In this case, since the power generation output is temporarily raised by 200 watts, the raised power generation output of 200 watts is consumed by, for example, a heater inside fuel cell system 100.

Note that, in fuel cell system 100 according to the present exemplary embodiment, fuel cell system 100 in which the plurality of fuel cell units 20A to 20N are connected to one another is illustrated, but fuel cell system 100 is not limited thereto. A fuel cell system in which a plurality of fuel cell stacks 10A to ION are connected to one another may be used.

### (Third exemplary embodiment)

A configuration of a fuel cell system according to a third exemplary embodiment of the present invention is hereinafter described. Respective apparatuses configuring fuel cell system 100 according to the third exemplary embodiment of the present invention are similar to those of fuel cell system 100 according to the first exemplary embodiment. Therefore the constituent elements similar to those according to the first exemplary embodiment are attached with the identical reference marks and description will be omitted.

Fuel cell system 100 according to the third exemplary embodiment of the present invention is different from those of the first exemplary embodiment and the second exemplary embodiment in that, when the number of fuel cell stacks 10A to 10N to be operated is increased, controller 3 preferentially causes one of fuel cell stacks 10A to 10N having a relatively higher voltage in previous power generation among fuel cell stacks 10A to 10N that are stopping power generation to operate. When the number of fuel cell stacks 10A to 10N to be operated is decreased, controller 3 preferentially causes one of fuel cell stacks 10A to 10N having a relatively lower voltage among fuel cell stacks 10A to 10N that are performing power generation to stop power generation.

Fuel cell system 100 according to the present exemplary embodiment includes a detector that detects a voltage across each of fuel cell stacks 10A to 10N that are performing power generation and a storage that stores a voltage history of the voltage across each of fuel cell stacks 10A to 10N.

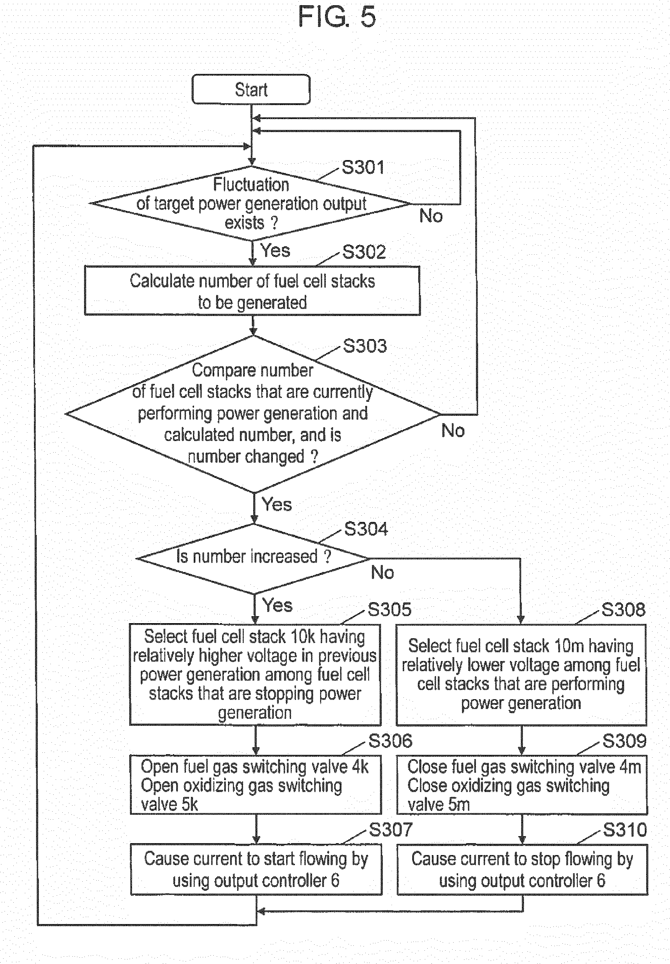

Hereinafter, operations and advantageous effects of fuel cell system 100 having the above-described configuration will be described with reference to FIG. 5.

FIG. 5 is a flowchart illustrating an operating method for fuel cell system 100 according to the present exemplary embodiment. Operations (steps) illustrated in the flowchart of FIG. 5 are executed based on control of controller 3.

As illustrated in FIG. 5, controller 3 causes fuel cell system 100 to start operating when power is applied to fuel cell system 100, and constantly performs the following operations.

First, controller 3 determines a target power generation output to be generated by fuel cell system 100 according to a fluctuation in consuming power of electric apparatus 7, and confirms a fluctuation in the target power generation output (step S301). The fluctuation in the target power generation output occurs not only on power-generating, but also on switching from activation to power generation, and the target power generation output fluctuates from 0 watts to 200 watts, for example.

In step S301, when controller 3 confirms the fluctuation in the target power generation output (Yes in S301), the process proceeds to step S302.

In step S302, controller 3 calculates the number of fuel cell stacks 10 to be operated so as to acquire the target power generation output confirmed in step S301 by using fuel cell stacks 10 as few as possible. In other words, controller 3 calculates an absolute minimum number of fuel cell stacks 10 to acquire the target power generation output.

In a case in which four fuel cell stacks 10 each of which has a rated power generation output of 700 watts are connected in parallel in fuel cell system 100, and the target power generation output is 1200 watts, for example, controller 3 calculates such that the number (absolute minimum number) of fuel cell stacks 10 that are needed to operate to acquire the target power generation output is two while setting a power generation output of first fuel cell stack 10 to 700 watts and setting a power generation output of second fuel cell stack 10 to 500 watts.

In step S301, when controller 3 confirms no fluctuation in the target power generation output (No in S301), the process returns to step S301.

Next, in step S303, controller 3 compares the number of fuel cell stacks 10 that are currently performing power generation with the number of fuel cell stacks 10 calculated in step S302. When the number of fuel cell stacks 10 to be operated needs to be changed (Yes in S303), the process proceeds to step S304.

In step S304, controller 3 confirms whether the number of fuel cell stacks 10 that is confirmed in step S303 is increased. When the number is increased (Yes in S304), the process proceeds to S305.

In step S305, controller 3 refers to the voltage history in the storage and selects fuel cell stack 10k whose voltage in previous power generation is relatively higher among fuel cell stacks 10 that are stopping power generation, and then the process proceeds to S306.

As the voltage in previous power generation, an average value of the voltages in previous power generation may be used, or an instantaneous value before stop of power generation may be used. However, the voltage is generally different depending on magnitude of the power generation output. A low power generation output (for example, 200 watts) has a higher voltage than a high power generation output (for example, 700 watts). Therefore when the voltages in the previous power generation are compared, voltages in the same power generation output are preferably compared.

Fuel cell stack 10k having the relatively higher voltage in previous power generation means fuel cell stack 10 having the average value of the voltages (the average value of the voltages means an average value of the voltages in a predetermined time period (for example, several seconds to several tens seconds)) in previous power generation higher than those of other fuel cell stacks 10, fuel cell stack 10 having the instantaneous voltage value before stop of power generation higher than those of other fuel cell stacks 10, fuel cell stack 10 having the average voltage value higher than those of other fuel cell stacks 10 when voltages of fuel cell stacks 10 having the same power generation output (for example, 200 watts) in previous power generation are compared, and fuel cell stack 10 having a higher instantaneous voltage value before stop of power generation when the voltages of fuel cell stacks 10 having the same power generation output (for example, 200 watts) in previous power generation are compared, for example.

In step S306, controller 3 opens fuel gas switching valve 4k and oxidizing gas switching valve 5k to activate fuel cell stack 10k selected in step S305, and the process proceeds to step S307.

In step S307, controller 3 causes a current to start flowing by using output controller 6, and the process returns to step S301. A control period from step S301 to step S307 may be set according to the speed of the fluctuation in the target power generation output, and may be set to one second, for example.

In step S304, when the number of fuel cell stacks 10 is decreased (No in S304), the process proceeds to S308.

In step S308, controller 3 refers to a voltage detected by the detector and selects fuel cell stack 10m having a relatively lower voltage among fuel cell stacks 10 that are performing power generation, and then the process proceeds to S309.

As the voltage to be detected, an average value of the voltages during power generation may be used, or an instantaneous value of the voltages during power generation may be used. However, the voltage is generally different depending on magnitude of the power generation output. A low power generation output (for example, 200 watts) has a higher voltage than a high power generation output (for example, 700 watts). Therefore when the detected voltages are compared, voltages in the same power generation output are preferably compared.

Fuel cell stack 10m having a relatively lower detected voltage means, for example, fuel cell stack 10 having the average value of voltages during power generation lower than those of other fuel cell stacks 10 that are performing power generation, fuel cell stack 10 having the instantaneous value of the voltages during power generation lower than those of other fuel cell stacks 10 that are performing power generation, fuel cell stack 10 having the average value of voltages during power generation lower than those of other fuel cell stacks 10 among fuel cell stacks 10 that are performing power generation, which have the same power generation output (for example, 200 watts), and fuel cell stack 10 having a lower instantaneous value of the voltages during power generation among fuel cell stacks 10 that are performing power generation, which have the same power generation output (for example, 200 watts).

In step S309, controller 3 closes fuel gas switching valve 4m and oxidizing gas switching valve 5m to stop fuel cell stack 10m selected in step S308, and the process proceeds to step S310.

In step S310, controller 3 causes a current to stop flowing by using output controller 6, and the process returns to step S301. A control period from step S301 to step S310 may be set according to the speed of the fluctuation in the target power generation output, and may be set to one second, for example.

Those processes from step S301 to step S310 are repeated.

With the above-described configuration, fuel cell system 100 according to the present exemplary embodiment can minimize the number of fuel cell stacks 10 whose voltages are lowered with passing of the operation time, and can suppress a maximum power generation output from being lowered with passing of the operation time in comparison with the case in which all fuel cell stacks 10 are operated to acquire the target power generation output.

Furthermore, in fuel cell system 100 according to the present exemplary embodiment, when the number of fuel cell stacks 10 to be operated is increased, fuel cell stack 10 having the relatively higher voltage in previous power generation among fuel cell stacks 10 that are stopping power generation is preferentially caused to operate. Further fuel cell stacks 10 to be operated are selected based on the voltage in previous power generation instead of the accumulated power-generation time. Therefore a fuel cell stack having a smaller voltage drop is caused to perform power generation more reliably.

Further, when the number of fuel cell stacks 10 to be operated is decreased, fuel cell stack 10 having a relatively lower voltage among fuel cell stacks 10 that are performing power generation is preferentially caused to stop power generation. Therefore fuel cell stack 10 having a larger voltage drop is caused to stop power generation more reliably.

In the present exemplary embodiment, controller 3 detects the voltage across each of fuel cell stacks 10A to 10N, and refers to the voltage in previous power generation in the storage. However, the present exemplary embodiment is not limited thereto. Controller 3 may detect a single cell voltage of each of fuel cell stacks 10A to 10N, and refer to a single cell voltage in previous power generation.

Controller 3 defines that the time when power is applied to fuel cell system 100 is start of the operation of fuel cell system 100, but is not limited thereto. The time when fuel cell stacks 10A to 10N start power generation may be the start of the operation of fuel cell system 100.

Further, in fuel cell system 100 according to the present exemplary embodiment, fuel cell system 100 in which the plurality of fuel cell stacks 10A to 10N are connected to one another is illustrated, but fuel cell system 100 is not limited thereto. A fuel cell system in which a plurality of fuel cell units 20A to 20N respectively including fuel cell stacks 10A to 10N and output controllers 6A to 6N are connected to one another may be used.

### (Fourth exemplary embodiment)

Respective apparatuses configuring fuel cell system 100 according to a fourth exemplary embodiment of the present invention are similar to those of fuel cell system 100 according to the first exemplary embodiment. Therefore the constituent elements similar to those according to the first exemplary embodiment are attached with the identical reference marks and description will be omitted.

Fuel cell system 100 according to the fourth exemplary embodiment of the present invention is different from those according to the first to third exemplary embodiments in that, when a difference between a voltage of one of fuel cell stacks 10A to 10N, which is performing power generation and has the lowest voltage, and a voltage of one of fuel cell stacks 10A to 10N, which is stopping power generation and has the highest voltage in previous power generation, becomes not less than a predetermined value, controller 3 causes the one of fuel cell stacks 10A to 10N, which is stopping power generation and has the highest voltage in previous power generation, to perform power generation, while causing the one of fuel cell stacks 10A to 10N, which is performing power generation and has the lowest voltage to stop power generation, to maintain the power generation output.

In fuel cell system 100 according to the present exemplary embodiment, controller 3 includes a detector that detects a voltage across each of fuel cell stacks 10A to 10N that are performing power generation, and a storage that stores a voltage history of the voltage across each of fuel cell stacks 10A to 10N.

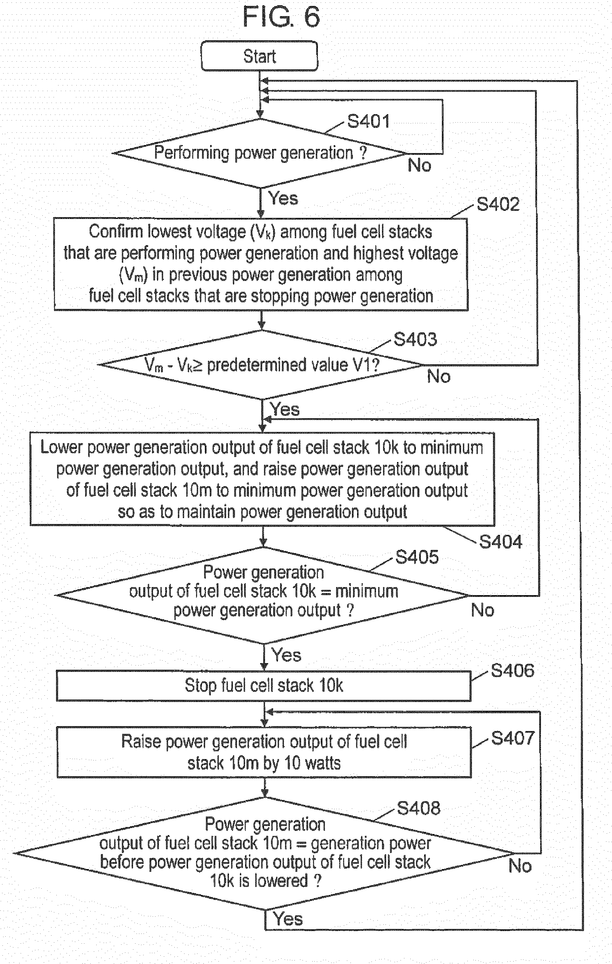

Hereinafter, operations and advantageous effects of fuel cell system 100 according to the present exemplary embodiment, which has the above-described configuration, will be described with reference to FIG. 6.

FIG. 6 is a flowchart illustrating an operating method for fuel cell system 100 according to the fourth exemplary embodiment of the present invention. Operations (steps) illustrated in the flowchart of FIG. 6 are executed based on control of controller 3.

As illustrated in FIG. 6, controller 3 causes fuel cell system 100 to start operating when power is applied to fuel cell system 100, and constantly performs the following operations.

First, controller 3 confirms whether fuel cell stacks 10 are performing power generation (step S401).

In step S401, when controller 3 confirms that fuel cell stacks 10 are performing power generation (Yes in S401), the process proceeds to step S402.

In step S401, none of fuel cell stacks 10 is not performing power generation (Yes in S401), the process returns to S401, and step S401 is repeated.

In step S402, controller 3 confirms the lowest voltage (Vk) among fuel cell stacks 10 that are performing power generation and the highest voltage (Vm) in previous power generation among fuel cell stacks 10 that are stopping power generation, and the process proceeds to step S403.

In step S403, controller 3 confirms whether a voltage difference (Vm - Vk) between the lowest voltage (Vk) among fuel cell stacks 10 that are performing power generation and the highest voltage (Vm) in previous power generation among fuel cell stacks 10 that are stopping power generation becomes not less than predetermined value V1. When the voltage difference (Vm - Vk) becomes not less than predetermined value V1, the process proceeds to step S404.

The voltage is generally different depending on magnitude of the power generation output. A low power generation output (for example, 200 watts) has a higher voltage than a high power generation output (for example, 700 watts). Therefore when the voltage difference (Vm - Vk) is calculated, voltages in the same power generation output are preferably compared.

Accordingly, in step S403, controller 3 calculates the difference (Vm - Vk) between the lowest voltage (Vk) among fuel cell stacks 10 that are performing power generation with the power generation output of 200 watts and the voltage (Vm) of fuel cell stack 10 having the power generation output of 200 watts in previous power generation among fuel cell stacks 10 that are stopping power generation, for example.

Appropriate predetermined value V1 is different according to a kind of fuel cell stack 10 to be used. Therefore predetermined value V1 may be set according to the kind of fuel cell stack 10 to be used. For example, V1 = 0.1 (V) is set in a case of the solid polymer fuel cell.

In step S403, when the voltage difference (Vm - Vk) is less than predetermined value V1 (No in S201), the process returns to step S401. A control period from step S401 to step S403 is set to one second, for example.

In step S404, controller 3 lowers a power generation output of fuel cell stack 10k having the lowest voltage (Vk) among fuel cell stacks 10 that are performing power generation to a minimum power generation output (for example, 200 watts) that can be power-generated by fuel cell stack 10k, and causes fuel cell stack 10m having the highest voltage (Vm) in previous power generation among fuel cell stacks 10 that are stopping power generation to perform power generation up to 200 watts, and the process proceeds to step S405.

When fuel cell stack 10m is caused to perform power generation, controller 3 opens fuel gas switching valve 4m and oxidizing gas switching valve 5m to cause a current to start flowing by using output controller 6.

In step S405, controller 3 confirms whether the power generation output of fuel cell stack 10k is lowered to 200 watts that are the minimum power generation output that can be power-generated by fuel cell stack 10k. When the power generation output of fuel cell stack 10k is lowered to 200 watts (Yes in S405), the process proceeds to step S406.

In step S405, when controller 3 confirms that the power generation output of fuel cell stack 10k is not lowered to 200 watts that are the minimum power generation output that can be power-generated by fuel cell stack 10k (No in S405), the process returns to step S404.

In step S406, controller 3 stops fuel cell stack 10k, and the process proceeds to step S407. When fuel cell stack 10k is caused to stop power generation, controller 3 closes fuel gas switching valve 4k and oxidizing gas switching valve 5k to cause a current to stop flowing by using output controller 6.

In step S407, controller 3 raises the power generation output of fuel cell stack 10m by 10 watts, for example, such that the power generation output of fuel cell stack 10m having highest voltage (Vm) in previous power generation among fuel cell stacks 10 that are stopping power generation becomes the same power generation output as a power generation output before the power generation output of fuel cell stack 10k is lowered, and the process proceeds to step S405.

In step S408, controller 3 confirms whether the power generation output of fuel cell stack 10m becomes the same power generation output as the power generation output before the power generation output of fuel cell stack 10k is lowered. When the power generation output is the same power generation output as the power generation output before the power generation output of fuel cell stack 10k is lowered (Yes in S408), the process returns to step S401.

In step S409, when controller 3 confirms that the power generation output of fuel cell stack 10m does not become the same power generation output as the power generation output before the power generation output of fuel cell stack 10k is lowered (No in S408), the process returns to step S407.

A control period from step S407 to step S408 may be set to a value in which fuel cell stack 10 can sufficiently cope with an increase or decrease amount of the power generation output, and may be set to one second, for example.

With the above-described configuration, fuel cell system 100 according to the present exemplary embodiment can prevent the voltage of only specific fuel cell stack 10 from being extremely lowered regardless of an increase or decrease of the number of fuel cell stacks 10 to be operated. Further, when fuel cell stack 10 having the lowest voltage among fuel cell stacks 10 that are performing power generation is switched to fuel cell stack 10 having the highest voltage in previous power generation among fuel cell stacks 10 that are stopping power generation, the same power generation output as the power generation output before switching can be maintained. Thus a stable power generation output can be fed.

In the present exemplary embodiment, controller 3 detects the voltage across each of fuel cell stacks 10A to 10N, and refers to the voltage in the previous power generation in the storage. However, the present exemplary embodiment is not limited thereto. Controller 3 may detect a single cell voltage of each of fuel cell stacks 10A to 10N, and refer to a single cell voltage in previous power generation.

Moreover, in step S403, the case in which the voltage difference (Vm - Vk) becomes not less than predetermined value V1 is used, but the case is not limited thereto. A case in which voltage ratio Vm/Vk becomes not less than predetermined value V2 may be used. In this case, V2 = 1.007 is set, for example.

Further, when fuel cell stack 10k having the lowest voltage (Vk) among fuel cell stacks 10 that are performing power generation is switched to fuel cell stack 10m having the highest voltage (Vm) in previous power generation among fuel cell stacks 10 that are stopping power generation, the number of fuel cell stacks 10 that are performing power generation is transiently, temporarily, increased.

Note that controller 3 defines that the time when power is applied to fuel cell system 100 is start of the operation of fuel cell system 100, but is not limited thereto. The time when fuel cell stacks 10A to 10N start power generation may be the start of the operation of fuel cell system 100.

Further a control period from step S401 to step S403 is set to one second, for example, but is not limited thereto. For example, a confirmation as to whether the voltage difference (Vm - Vk) becomes not less than predetermined value V1 may be made once per hour.

Further, in step S408, controller 3 confirms whether the power generation output of fuel cell stack 10m becomes the same power generation output as the power generation output before the power generation output of fuel cell stack 10k is lowered, but is not limited thereto. Controller 3 may determine the power generation output of fuel cell stack 10m according to a current target power generation output.

Note that, in step S405, an increase amount of the power generation output is 10 watts per once, but is not limited thereto. A value in which fuel cell stack 10 can sufficiently cope with an increase or decrease of the power generation output may be set.

Further, in step S404 to step S408, since the power generation output of fuel cell system 100 is temporarily lowered while the power generation output of fuel cell stack 10k is lowered, a lacking power generation output may be fed from the commercial power supply, for example.

Further, the power generation output of fuel cell stack 10k having the lowest voltage (Vk) among fuel cell stacks 10 that are performing power generation may be lowered by 200 watts, after causing fuel cell stack 10m having the highest voltage (Vm) in previous power generation among fuel cell stacks 10 that are stopping power generation to perform power generation and raising the power generation output thereof to the minimum power generation output (for example, 200 watts). In this case, since the power generation output is temporarily raised by 200 watts, the raised power generation output of 200 watts is consumed by, for example, a heater inside fuel cell system 100.

Further, in fuel cell system 100 according to the present exemplary embodiment, fuel cell system 100 in which the plurality of fuel cell stacks 10A to 10N are connected to one another is illustrated, but fuel cell system 100 is not limited thereto. A fuel cell system in which a plurality of fuel cell units 20A to 20N respectively including fuel cell stacks 10A to 10N and output controllers 6A to 6N are connected to one another may be used.

As described above, the first to fourth exemplary embodiments of the present invention are illustratively described. The present invention is not limited to a configuration in which the embodiment illustrated in each of the first to fourth exemplary embodiments described above is formed independently of each other. The present invention also includes a configuration that is formed by combining the implementation form illustrated in each of the first to fourth exemplary embodiments. For example, fuel cell system 100 can determine the number of fuel cell stacks to be operated by combining the control illustrated in each of the first exemplary embodiment and the third exemplary embodiment. In this case, for example, the number of fuel cell stacks to be operated may be determined based on the control using the accumulated power-generation time illustrated in the first exemplary embodiment and the control using the voltage in previous power generation illustrated in the third exemplary embodiment, which will be respectively weighted.

As described above, a fuel cell system according to an example of the exemplary embodiments of the present invention is a fuel cell system in which a plurality of fuel cell stacks are connected to one another, and which includes a controller that is configured to cause one or more fuel cell stacks of the plurality of fuel cell stacks to operate so as to minimize a number of fuel cell stack to be operated, to acquire a target power generation output.

With the above-described configuration, the number of fuel cell stack, those fuel cell stacks whose voltages are lowered with passing of the operation time, can be minimized. This configuration can suppress the maximum power generation output from being lowered with passing of the operation time in comparison with the case in which all fuel cell stacks are operated to acquire the target power generation output.

Further, in the fuel cell system according to an example of the exemplary embodiments of the present invention, when the number of fuel cell stacks to be operated is to be increased, the controller may preferentially cause a fuel cell stack having a relatively shorter accumulated power-generation time among one or more fuel cell stacks of the plurality of fuel cell stacks in which power generation is being stopped, to operate. The above-described configuration can prevent the voltage of only a particular fuel cell stack from being extremely lowered.

Further, in the fuel cell system according to an example of the exemplary embodiments of the present invention, when the number of fuel cell stack to be operated is to be decreased, the controller may preferentially cause a fuel cell stack having a relatively longer accumulated power-generation time among one or more fuel cell stacks of the plurality of fuel cell stacks in which power generation is being performed, to stop the power generation. The above-described configuration can prevent the voltage of only a particular fuel cell stack from being extremely lowered.

Further, in the fuel cell system according to an example of the exemplary embodiments of the present invention, when a difference between an accumulated power-generation time of a fuel cell stack in which power generation is being performed, and an accumulated power-generation time of a fuel cell stack in which power generation is being stopped, becomes not less than a predetermined value, the controller may cause one or more fuel cell stacks of the plurality of fuel cell stacks in which the power generation is being stopped, to perform the power generation, and may cause one of more fuel cell stacks of the plurality of fuel cell stacks in which the power generation is being performed, to stop the power generation. With the above-described configuration, the fuel cell system can prevent a voltage of only a specific fuel cell stack from being extremely lowered regardless of an increase or a decrease of the number of fuel cell stack to be operated.

Further, in the fuel cell system according to an example of the exemplary embodiments of the present invention, when the difference between the accumulated power-generation time of the fuel cell stack in which power generation is being performed, and the accumulated power-generation time of the fuel cell stack in which power generation is being stopped, becomes not less than the predetermined value, the controller may cause the fuel cell stack having the shortest accumulated power-generation time among one or more of the plurality of fuel cell stacks in which the power generation is being stopped, to perform the power generation, while causing the fuel cell stack having the longest accumulated power-generation time among one or more fuel cell stacks of the plurality of the fuel cell stacks in which the power generation is being performed, to stop the power generation, to maintain the power generation output. With the above-described configuration, when the fuel cell stack having the longest accumulated power-generation time among one or more fuel cell stacks of the plurality of fuel cell stacks in which the power generation is being performed is switched to the fuel cell stack having the shortest accumulated power-generation time among one or more fuel cell stacks in which the power generation is being stopped, the same power generation output as the power generation output before switching can be maintained, and thus a stable power generation output can be fed.

Further, in the fuel cell system according to an example of the exemplary embodiments of the present invention, when the number of fuel cell stack to be operated is to be increased, the controller may preferentially cause the fuel cell stack having a relatively higher voltage in previous power generation among one or more fuel cell stacks of the plurality of fuel cell stacks in which power generation is being stopped, to operate. With the above-described configuration, when the number of fuel cell stack to be operated is to be increased, the controller selects one or more fuel cell stacks of the plurality of fuel cell stacks to be newly operated based on the voltage in previous power generation instead of the accumulated power-generation time. Therefore, the one or more fuel cell stacks having a smaller voltage drop is caused to perform power generation more reliably.

Further, in the fuel cell system according to an example of the exemplary embodiments of the present invention, when the number of fuel cell stack to be operated is to be decreased, the controller may preferentially cause one or more fuel cell stacks of the plurality of fuel cell stacks having a relatively lower voltage among one or more fuel stacks of the plurality of fuel cell stacks in which power generation is being performed, to stop the power generation. The above-described configuration can cause the one ore more fuel cell stacks with a larger voltage drop to stop power generation more reliably.

Further, in the fuel cell system according to an example of the exemplary embodiments of the present invention, when a difference between a voltage of a fuel cell stack that is performing power generation and has the lowest voltage and a voltage of a fuel cell stack that is stopping power generation and has the highest voltage in previous power generation becomes not less than a predetermined value, the controller may cause the fuel cell stack that is stopping power generation and has the highest voltage in previous power generation to perform power generation, while causing the fuel cell stack that are performing power generation and has the lowest voltage to stop power generation. With the above-described configuration, the voltage of only a specific fuel cell stack can be prevented from being extremely lowered regardless of an increase or decrease of the number of fuel cell stacks to be operated.

Further, in the fuel cell system according to an example of the exemplary embodiments of the present invention, when a difference between a voltage of the fuel cell stack that is performing power generation and has the lowest voltage and a voltage of the fuel cell stack that is stopping power generation and has the highest voltage in previous power generation becomes not less than a predetermined value, the controller may cause the fuel cell stack that is stopping power generation and has the highest voltage in previous power generation to perform power generation, while causing the fuel cell stack that is performing power generation and has the lowest voltage to stop power generation, to maintain the power generation output. With this configuration, when the fuel cell stack that is performing power generation and has the lowest voltage is switched to the fuel cell stack that is stopping power generation and has the highest voltage in previous power generation, the same power generation output as the power generation output before switching can be maintained. Thus a stable power generation output can be fed.

An method for operating a fuel cell system according to an example of the exemplary embodiments of the present invention is directed to an method for operating a fuel cell system in which a plurality of fuel cell stacks are connected to one another, and includes an operation (step) for minimizing a number of fuel cell stack to be operated, to acquire a target power generation output. With this configuration, the number of fuel cell stacks whose voltages are lowered with passing of the operation time can be minimized. This configuration can suppress the maximum power generation output from being lowered with passing of the operation time in comparison with the case in which all fuel cell stacks are operated to acquire the target power generation output.

### INDUSTRIAL APPLICABILITY

As described above, in a fuel cell system in which a plurality of fuel cell stacks are connected to one another, the present invention provides a fuel cell system that can minimize the number of fuel cell stacks whose voltages are lowered with passing of an operation time, and can suppress a maximum power generation output from being lowered with passing of the operation time in comparison with a case in which all fuel cell stacks are operated to acquire a target power generation output. Accordingly, the present invention can widely be applied to various types of fuel cell systems including home-use fuel cell systems and business-use fuel cell systems.

### REFERENCE MARKS IN THE DRAWINGS

1: fuel gas feeder
2: oxidizing gas feeder
3: controller
4A to 4N: fuel gas switching valve
5A to 5N: oxidizing gas switching valve
6, 6A to 6N: output controller
7: electric apparatus
10A to ION: fuel cell stack
20A to 20N: fuel cell unit
100: fuel cell system

## Claims

1. A fuel cell system comprising:
a plurality of fuel cell stacks which are connected to one another, and
a controller configured to control operations of the plurality of fuel cell stacks so as to minimize a number of fuel cell stack to be operated among the plurality of fuel cell stacks, to acquire a target power generation output.

2. The fuel cell system according to claim 1, wherein, when the number of fuel cell stack to be operated is to be increased, the controller is configured to preferentially cause a fuel cell stack to operate, the fuel cell stack having a relatively shorter accumulated power-generation time among one or more fuel cell stacks of the plurality of fuel cell stacks in which power generation is being stopped.

3. The fuel cell system according to claim 1 or 2, wherein, when the number of fuel cell stack to be operated is to be decreased, the controller is configured to preferentially cause a fuel cell stack to stop power generation, the fuel cell stack having a relatively longer accumulated power-generation time among one or more fuel cell stacks of the plurality of fuel cell stacks in which power generation is being performed.

4. The fuel cell system according to claim 1, wherein, when a difference between an accumulated power-generation time of a fuel cell stack having a longest accumulated power-generation time among one or more fuel cell stacks of the plurality of fuel cell stacks in which power generation is being performed, and an accumulated power-generation time of a fuel cell stack having a shortest accumulated power-generation time among one or more fuel cell stacks of the plurality of fuel cell stacks in which power generation is being stopped, becomes not less than a predetermined value, the controller is configured to cause the fuel cell stack having the shortest accumulated power-generation time among the one or more fuel cell stacks in which the power generation is being stopped, to operate, and is configured to cause the fuel cell stack having the longest accumulated power-generation time among the one or more fuel cell stacks in which the power generation is being performed, to stop the power generation.

5. The fuel cell system according to claim 1 or 4, wherein, when the difference between the accumulated power-generation time of the fuel cell stack having the longest accumulated power-generation time among the one or more fuel cell stacks of the plurality of fuel cell stacks in which the power generation is being performed, and the accumulated power-generation time of the fuel cell stack having the shortest accumulated power-generation time among the one or more fuel cell stacks of the plurality of fuel cell stacks in which the power generation is being stopped, becomes not less than the predetermined value, the controller is configured to control the operations of the plurality of fuel cell stacks to maintain a power generation output by causing the fuel cell stack having the shortest accumulated power-generation time to operate, while causing the fuel cell stack having the longest accumulated power-generation time to stop the power generation.

6. The fuel cell system according to claim 1, wherein, when the number of fuel cell stack to be operated is to be increased, the controller is configured to preferentially cause a fuel cell stack to operate, the fuel cell stack having a relatively higher voltage in previous power generation among one or more fuel cell stacks of the plurality of fuel cell stacks in which power generation is being stopped.

7. The fuel cell system according to claim 1 or 6, wherein, when the number of fuel cell stack to be operated is to be decreased, the controller is configured to preferentially cause a fuel cell stack to stop power generation, the fuel cell stack having a relatively lower voltage among one or more fuel cell stacks in which power generation is being performed, of the plurality of fuel cell stacks.

8. The fuel cell system according to claim 1, wherein, when a difference between a voltage of a fuel cell stack having a lowest voltage among one or more fuel cell stacks of the plurality of fuel cell stacks in which power generation is being performed, and a voltage of a fuel cell stack having a highest voltage in previous power generation among one or more fuel cell stacks of the plurality of fuel cell stacks in which power generation is being stopped, becomes not less than a predetermined value, the controller is configured to cause the fuel cell stack having the highest voltage in the previous power generation among the one or more fuel cell stacks of the plurality of fuel cell stacks in which the power generation is being stopped, to operate, and is configured to cause the fuel cell stack having the lowest voltage among the one or more fuel cell stacks of the plurality of fuel cell stacks in which the power generation is being performed, to stop the power generation.

9. The fuel cell system according to claim 1 or 8, wherein, when the difference between the voltage of the fuel cell having the lowest voltage among the one or more fuel cell stacks in which the power generation is being performed, of the plurality of fuel cell stacks, and the voltage of the fuel cell stack having the highest voltage in the previous power generation among the one or more fuel cell stacks in which the power generation is being stopped, of the plurality of fuel cell stacks, becomes not less than the predetermined value, the controller is configured to control the operations of the plurality of fuel cell stacks to maintain a power generation output, by causing the fuel cell stack having the highest voltage in the previous power generation among the one or more fuel cell stacks in which the power generation is being stopped, to operate, while causing the fuel cell stack having the lowest voltage among the one or more fuel cell stacks in which the power generation is being performed, to stop the power generation.

10. A method for operating a fuel cell system in which a plurality of fuel cell stacks are connected to one another, the method comprising minimizing a number of fuel cell stack to be operated, to acquire a target power generation output.
